# EUROPEAN PATENT SPECIFICATION

(11) **EP 2 590 515 B1**
(45) Date of publication and mention of the grant of the patent: **03.10.2018**
(21) Application number: 11727773.1
(22) Date of filing: 12.05.2011
(51) Int. Cl.: A23G 9/04, A23G 9/22, A23G 9/28

(54) **MACHINE FOR PRODUCING AND DISPENSING PRODUCTS SUCH AS ICE CREAMS, GRANITA OR FROZEN BEVERAGES**
MASCHINE ZUR HERSTELLUND UND AUSGABE VON PRODUKTEN WIE ETWA SPEISEEIS, GRANITA ODER GEFRORENEN GETRÄNKEN
MACHINE PERMETTANT DE PRODUIRE ET DE DISTRIBUER DES PRODUITS TELS DES CRÈMES GLACÉES, DES GRANITÉS, OU DES BOISSONS GLACÉES

(30) Priority: 08.07.2010 IT MI20101262
(43) Date of publication of application: 15.05.2013
(73) Proprietor: Ugolini SpA, 20090 Opera (MI) (IT)
(72) Inventor: UGOLINI, Marco Corrado, I-20136 Milan (IT)
(74) Representative: Lampis, Marco
(86) International application number: PCT/IB2011/052085
(87) International publication number: WO 2012/004687

(56) References cited:
- EP-A1- 0 799 575
- EP-A1- 1 459 666
- EP-A1- 1 477 455
- EP-A2- 1 262 724
- WO-A1-03/082022
- ES-A1- 2 166 248
- JP-A- 11 253 105
- US-A- 2 414 521
- US-A- 3 587 350
- US-A- 4 575 255
- US-A- 6 082 123
- US-A- 6 095 677
- US-A- 6 163 095

## Description

The present invention relates to a machine for producing and dispensing products such as ice creams, granita or frozen beverages, of the type comprising a container for the product, which has a cooling evaporator cylinder around which a motor-driven mixer element rotates.

Usually, in machines of the prior art the mixer element is operated by a shaft which passes through the rear wall of the container axially with respect to the evaporator cylinder so as to reach a motor unit or speed reducer which is arranged in the rear part of the machine, behind the product container. The rear part of the machine is therefore very deep, in order to contain said speed reducer.

In an attempt to reduce the overall dimensions, machines have been proposed in the prior art where the speed reducer extends substantially vertically (namely in a direction transverse to the axis of rotation of the mixer element), for example with a gear train which displaces the axis of the motor downwards with respect to the axis of the mixer.

In some known solutions, the axis is displaced to the point of allowing the motor to be housed underneath the container. This, however, results in the motor occupying the space in the base of the machine where the machine refrigerating circuit is also housed.

WO03082022 discloses a method and apparatus for producing a chilled or partially frozen beverage. The system includes a beverage hopper, a chilling unit, a rotatable mixing member, a sensing member for detecting an occurrence of a rotation reversal condition, a controller for generating a rotation reversal signal in response to the sensing member, and a drive motor coupled to the mixing member for rotating the mixing member in a first direction and a second, reverse direction in response to a rotation reverse signal.

EP0799575 discloses a machine for preparing and delivering frozen beverages, such as water-ices, comprises a tank for holding and refrigerating the beverage, in which there is an evaporator of a refrigerating circuit and a mixing propeller the rotation axis of which is magnetically coupled, through a tank wall, with the rotation axis of an electric reduction motor. The magnetic coupling is formed of a first magnetic set external to the tank and driven in rotation by the rotation axis of the reduction motor, and a second magnetic set internal to the tank and connected to the propeller rotation axis. The first and second sets face each other on opposite faces of the tank wall to be magnetically coupled through said wall, the first set thereby driving in rotation the second set.

EP1477455 discloses a machine for dispensing icy beverages such as slushes, sorbets and the like, particularly coffee-flavored ones, comprising at least one tank for containing an icy beverage, provided with at least one inlet and at least one outlet, elements for agitating the beverage, which are arranged inside the tank, and at least one refrigeration system (RS) provided with an evaporation unit (EU) associated with the tank, and elements (10) for sensing and controlling the temperature of the beverage contained in the tank, which are functionally associated with the refrigeration system (RS).

US6082123 discloses a dispenser for a frozen drink comprises a cooling system which is attached inside a dispenser housing, a tank for storing a drink, a cylinder for mixing which is connected to the tank, a beater bar attached to the cylinder for mixing, an actuation motor connected to the cylinder for mixing for rotating the beater bar and a monitoring equipment for monitoring characteristics of a relation of speed and torque of the actuation motor. The cooling system comprises a compressor which forms a cooling circulation loop, a drier, an evaporator, a heat exchanger, and a condenser. When the speed of the actuation motor is reduced, the compressor is automatically turned off, then a signal for stopping a flow of a coolant into the evaporator is generated due to the monitoring equipment.

US244521 discloses a beverage dispenser including a container adapted to serve as a reservoir for a multiplicity of servings of a beverage, this container having a base portion into which a motor is adapted to be mounted and also having a central, liquid-proof column extending upwardly therefrom which is arranged to receive the remote end of a drive shaft connected with the motor, this remote end of the drive shaft being arranged to receive a circulator which may take the form of depending legs or may take the form of a container into which ice may be placed, whereby heat exchange between the ice in the container and the beverage will reduce the temperature of the beverage to substantially that of the ice as the container is rotated by the shaft to the upper end of which it is connected, this container for the ice preferably having radially outwardly extending fins thereon for agitating the beverage to prevent sedimentation therein and to Insure complete cooling thereof. This results in the need for a larger sized base and constitutes a constraint for the arrangement of the parts of the refrigerating circuit.

The main object of the present invention is to provide a machine of the abovementioned type, but with a reduction in the volume resulting from the motor unit.

The present invention discloses a machine suitable for producing and dispensing products such as ice cream, frozen beverages or granita, comprising a product container 12 which is provided with a tap 15 for dispensing the product and into which there projects, from a rear wall 23, a cylinder 16 with a horizontal axis 17 which forms the evaporator of a refrigerating circuit of the machine for cooling the product in the container, a mixer element of the propeller type 18 for stirring the product being present around the cylinder so as to rotate coaxially with the axis 17 of the cylinder by means of a motor unit 19, which is arranged outside the container and which rotates the mixer element 18 by means of a drive shaft 20 which passes along the axis of the cylinder and which is connected to the mixer element 18 at one end of the cylinder which is opposite to the said rear wall 23, characterized in that the motor unit 19 is passing through the said real wall 23, the motor unit 19 is at least partially housed inside the cylinder 16 and the motor unit 19 comprises an electric motor 26 having an axis of rotation arranged substantially coaxially with axis 17 of the cylinder and a gear reduction unit 27 which is connected in front of the electric motor and with its output which is connected coaxially to said drive shaft, the gear reduction unit 27 being at least partially housed inside the cylinder 16 which is sealed from the product inside the container 12.

In order to illustrate more clearly the innovative principles of the present invention and its advantages compared to the prior art, an example of embodiment applying these principles will be described below, with the aid of the sole attached drawing.

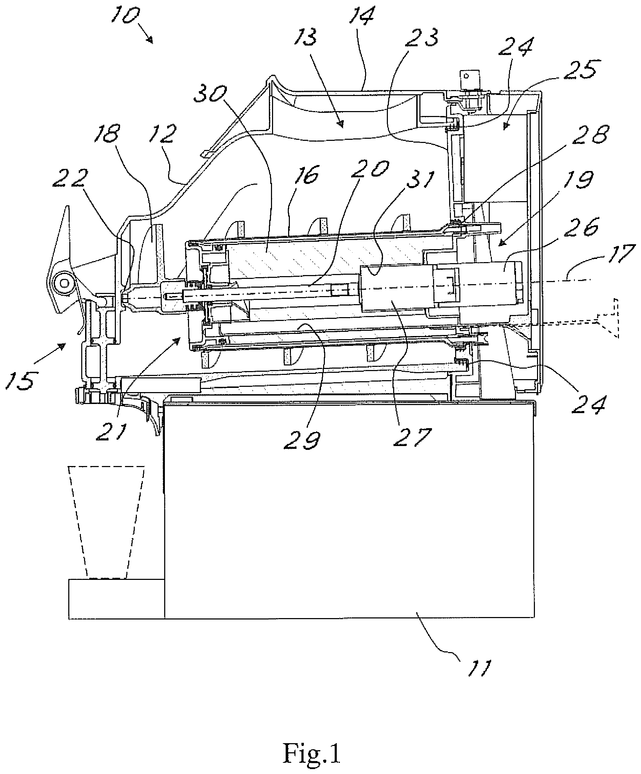

With reference to the figure, this shows a machine, denoted generally by 10, for producing and dispensing ice creams, frozen beverages, granita and the like.

The machine 10 comprises a base 11 on which a container 12 is mounted, said container being usually made of transparent plastic and provided with a top opening 13 which is advantageously closed by a lid 14 fitted with a key and having a front tap 15 for controlled dispensing of the product.

The container 12 has inside it an evaporator 16 of a refrigerating circuit (of the known type and therefore not described or shown in detail), the other parts of which are advantageously contained in the base 11. The evaporator is in the form of a hollow cylinder with a substantially horizontal axis 17 and projects into the container from an end wall 23.

Inside the container there is a mixer element 18 which is in the form of a cylindrical propeller which surrounds the evaporator cylinder 16 and rotates coaxially therewith by means of a motor unit 19 situated outside the container and connected to the mixer element 18 by means of shaft 20 which passes through the cylinder along the axis 17 and enters into the container, via seals 21, at the free front end of the cylinder 16. Advantageously, the mixer element rests with its end against a seat 22 formed in the inner wall of the container in front of the free end of the cylinder. The mixer element is of the type known per se intended to simultaneously mix the product, assist formation and dispensing thereof and prevent the formation of deposits on the outer wall of the cooling cylinder.

Again advantageously, the container is connected to the end wall 23 in a removable manner by means of seals 24 so that the end wall 23 (vertically projecting from the base 11) also forms a fixed rear closing wall of the container. A closed space 25 is formed behind the end wall 23 for the machine parts, such as electronic control boards, etc.

The evaporator cylinder 16 is sealed off from the product inside the container by means of a seal 28, situated along the connection between cylinder and rear wall 23, and the front seals 21. This also ensures that the various parts of the machine may be disassembled, as can be easily imagined by the person skilled in the art.

The motor unit is at least partially housed inside the evaporator cylinder 16 via the rear wall 23. Preferably the motor unit is fixed so as to project from the wall 23.

Advantageously, the motor unit 19 is formed with an electric motor 26 which has its axis of rotation coaxial with the axis 17 of the cylinder and the drive shaft 20 and the front part of the motor unit contains a suitable gear reduction unit 27 (of the type known per se) with its input and output coaxial with the axis 17.

The motor unit thus has a form (advantageously cylindrical) which extends preferably along the axis 17. The electric motor may be of the brushless type for a more advantageous size/power ratio and better electronic control of the speed during the various product preparation and dispensing phases.

Preferably, the inner wall of the cylinder is lined with a layer 30 of heat-insulating material in which a seat 31 for the motor unit and the coaxial drive shaft is formed. The layer 30, which isolates acoustically at least partly the motor unit, is also able to reduce the noise level of the machine and dampens any operating vibrations of the motor unit.

Advantageously, inside the cylinder and in a position below the axis 17 and the motor unit 19 there is a tray 29 (extractable towards the rear of the machine as shown in broken lines) for collecting liquid which could form, for example as a result of condensation or seepage, inside the cylinder.

At this point it is clear how the predefined objects have been achieved. By using the space inside the evaporator cylinder to contain at least part of the motor unit (designed with a form which extends preferably along the axis of rotation 17, instead of transversely, as instead usually occurs in the prior art) it is possible to reduce significantly the rear volume of the machine behind the container and its mechanical structure is simplified. The space freed at the rear may be used both to house other parts of the machine and to provide a machine having the part behind the container with a smaller depth. This enables the overall dimensions of the machine to be optimized with respect to the capacity of the container.

Moreover, the base remains fully available for the other parts of the machine and, in particular, the refrigerating unit.

If necessary, the entire motor unit may be housed inside the evaporator cylinder.

Obviously, the above description of an embodiment applying the innovative principles of the present invention is provided by way of example of these innovative principles and must therefore not be regarded as limiting the scope of the rights claimed herein. For example, the exact form and proportion of the various parts of the machine may vary depending on the specific technical and aesthetic requirements.

## Claims

1. Machine suitable for producing and dispensing products such as ice cream, frozen beverages or granita, comprising a product container (12) which is provided with a tap (15) for dispensing the product and into which there projects, from a rear wall (23), a cylinder (16) with a horizontal axis (17) which forms the evaporator of a refrigerating circuit of the machine for cooling the product in the container, a mixer element of the propeller type (18) for stirring the product being present around the cylinder so as to rotate coaxially with the axis (17) of the cylinder by means of a motor unit (19), which is arranged outside the container and which rotates the mixer element (18) by means of a drive shaft (20) which passes along the axis of the cylinder and which is connected to the mixer element (18) at one end of the cylinder which is opposite to the said rear wall (23), **characterized in that** the motor unit (19) is passing through the said real wall (23), the motor unit (19) is at least partially housed inside the cylinder (16) and the motor unit (19) comprises an electric motor (26) having an axis of rotation arranged substantially coaxially with axis (17) of the cylinder and a gear reduction unit (27) which is connected in front of the electric motor and with its output which is connected coaxially to said drive shaft, the gear reduction unit (27) being at least partially housed inside the cylinder (16) which is sealed from the product inside the container (12).

2. Machine according to Claim 1, **characterized in that** the inner wall of the cylinder (16) is lined with a layer (30) of heat-insulating material in which a seat (31) for the motor unit and for receiving the coaxial drive shaft (20) is formed.

3. Machine according to Claim 1, **characterized in that** the motor unit (19) has a form which extends preferably along the axis of the cylinder (17).

## Patentansprüche

1. Maschine, welche zur Herstellung und Ausgabe von Produkten wie Eiscreme, gefrorenen Getränken oder Granita geeignet ist, umfassend einen Behälter (12) für das Produkt, welcher mit einem Hahn (15) zur Ausgabe des Produkts ausgestattet ist, und in welchen sich von einer hinteren Wand (23) ein Zylinder (16) mit einer horizontalen Achse (17) erstreckt, welcher den Verdampfer eines Kühlkreislaufs der Maschine zum Kühlen des Produkts in dem Behälter bildet, ein Mischerelement des Propellertyps (18), zum Versteifen des um den Zylinder befindlichen Produkts, das koaxial zur Achse (17) des Zylinders rotierbar durch eine Motoreinheit (19) ist, welche außerhalb des Behälters angeordnet ist, und welche das Mischerelement (18) durch eine Antriebswelle (20) rotiert, welche entlang der Achse des Zylinders verläuft, und welche mit dem Mischerelement (18) an einem Ende des Zylinders verbunden ist, welches gegenüberliegend zu der hinteren Wand (23) ist, **dadurch gekennzeichnet, dass** sich die Motoreinheit (19) durch die hintere Wand (23) erstreckt, dass die Motoreinheit (19) zumindest teilweise innerhalb des Zylinders angeordnet ist, und dass die Motoreinheit (19) einen elektrischen Motor (26) umfasst, aufweisend eine im Wesentlichen koaxial zur Achse (17) des Zylinders angeordnete Rotationsachse und eine Getriebeuntersetzungseinheit (27), welche vor dem elektrischen Motor angebunden ist und mit ihrem Ausgang koaxial verbunden mit der Antriebswelle ist, wobei die Untersetzungseinheit (27) zumindest teilweise innerhalb des Zylinders (16) angeordnet ist, welcher gegenüber dem Produkt innerhalb des Behälters (12) abgedichtet ist.

2. Maschine gemäß Anspruch 1, dadurch charakterisiert, dass die innere Wand des Zylinders (16) mit einer Schicht (30) wärmeisolierenden Materials ausgekleidet ist, in welcher ein Sitz (31) für die Motoreinheit und zur Aufnahme der koaxialen Antriebswelle (20) ausgebildet ist.

3. Maschine gemäß Anspruch 1, dadurch charakterisiert, dass die Motoreinheit (19) eine Form hat, welche sich vorzugsweise entlang der Achse des Zylinders (17) erstreckt.

## Revendications

1. Machine appropriée pour produire et distribuer des produits tels que de la crème glacée, des boissons fraîches ou des granités, comprenant un récipient de produit (12) qui est prévu avec un robinet (15) pour distribuer le produit et dans lequel fait saillie, depuis une paroi arrière (23), un cylindre (16) avec un axe horizontal (17) qui forme l'évaporateur d'un circuit de réfrigération de la machine pour refroidir le produit dans le récipient, un élément formant mélangeur de type à hélice (18) pour remuer le produit qui est présent autour du cylindre afin de tourner de manière coaxiale avec l'axe (17) du cylindre au moyen d'une unité de moteur (19), qui est agencée à l'extérieur du récipient et qui fait tourner l'élément formant mélangeur (18) au moyen d'un arbre d'entraînement (20) qui passe le long de l'axe du cylindre et qui est raccordé à l'élément formant mélangeur (18) au niveau d'une extrémité du cylindre qui est opposée à ladite paroi arrière (23), **caractérisée en ce que** l'unité de moteur (19) passe à travers ladite paroi arrière (23), l'unité de moteur (19) est au moins partiellement logée à l'intérieur du cylindre (16) et l'unité de moteur (19) comprend un moteur électrique (26) ayant un axe de rotation agencé de manière sensiblement coaxiale avec l'axe (17) du cylindre et une unité de démultiplication (27) qui est raccordée à l'avant du moteur électrique et avec sa sortie qui est raccordée de manière coaxiale audit arbre d'entraînement, l'unité de démultiplication (27) étant au moins partiellement logée à l'intérieur du cylindre (16) qui est scellé par rapport au produit à l'intérieur du récipient (12).

2. Machine selon la revendication 1, **caractérisée en ce que** la paroi interne du cylindre (16) est revêtue avec une couche (30) de matériau thermiquement isolant dans lequel un siège (31) pour l'unité de moteur et pour recevoir l'arbre d'entraînement coaxial (20) est formé.

3. Machine selon la revendication 1, **caractérisée en ce que** l'unité de moteur (19) a une forme qui s'étend de préférence le long de l'axe du cylindre (17).
